# EUROPEAN PATENT SPECIFICATION

(11) **EP 2 064 958 B1**
(45) Date of publication and mention of the grant of the patent: **03.06.2015**
(21) Application number: 07712555.7
(22) Date of filing: 07.02.2007
(51) Int. Cl.: A23L 1/06, A23K 1/04, A23L 1/277

(54) **METHOD FOR COLLECTING BLOOD AND TRANSFORMING SAME INTO A HYDROLYZED PROTEIN USING SLAUGHTER ANIMAL BLOOD, SUCH AS TO OBTAIN HYDROLYZED BLOOD PROTEIN**
VERFAHREN ZUR ENTNAHME VON BLUT UND ZU SEINER UMWANDLUNG IN HYDROLYSIERTES PROTEIN UNTER VERWENDUNG VON SCHLACHTTIERBLUT, UM ZU HYDROLYSIERTEM BLUTPROTEIN ZU GELANGEN
PROCÉDÉ DE RÉCUPÉRATION ET DE TRANSFORMATION DU SANG EN UNE PROTÉINE HYDROLYSÉE À PARTIR DU SANG D'ANIMAUX D'ABATTAGE, PERMETTANT D'OBTENIR UNE PROTÉINE SANGUINE HYDROLYSÉE (PHS)

(30) Priority: 17.07.2006 ES 200601905
(43) Date of publication of application: 03.06.2009
(73) Proprietor: Tecnoamyn S.L., 28016 Madrid (ES)
(72) Inventor: FLORIDO RODRÍGUEZ, José Luis, 41010 Sevilla (ES)
(74) Representative: González-Mogena González, Inigo
(86) International application number: PCT/ES2007/000062
(87) International publication number: WO 2008/009757

(56) References cited:
- EP-A1- 0 397 890
- EP-A1- 0 653 165
- WO-A1-91/04672
- WO-A1-03/063607
- ES-A1- 8 308 478
- ES-B1- 2 154 182
- ES-T3- 2 132 835
- MX-A- PA01 008 957
- US-A1- 2002 123 615
- US-B1- 6 217 932

## Description

### OBJECT OF THE INVENTION

This descriptive report relates to an application for an invention patent for a method for collecting blood and transforming it into a hydrolyzed protein using slaughter animal blood, such as to obtain hydrolyzed blood protein, employing a suitably developed technology which deals with the resolution of the four principal problems which have until now prevented the full exploitation of high biological value blood proteins, and their use in industrial processes as additives for human or animal food.

### FIELD OF THE INVENTION

This invention has its application within the industry devoted to the production of machinery, devices and methods for the use of products in the field of biology and subsequent use in industrial processes.

### BACKGROUND OF THE INVENTION

As is known, until now the use of animal blood has been problematic due to issues relating to collection, sterilization, bleaching and functionality.

Collection of the blood has always been made difficult by the fact that until now no system or method has existed that would allow for the stability, sterility, preservation and transportation of the blood without the use of low temperatures.

As far as sterilization is concerned, it must be stated that, due to its water and nutrient content, blood is highly susceptible to rapid contamination, since in current processes blood that is used requires a stabilizing agent to separate the soluble fraction from the cell fraction and rapidly cool them to below four degrees.

In this process the blood remains exposed to possible contamination for an indefinite time.

As far as bleaching is concerned, it is known that the strong and persistent pigmentation of blood constitutes a difficulty that, in the event that the aforementioned problems in the collection and sterilization of blood have been solved, makes the use of the final product in any technological process as an additive and, therefore, its sale, problematic.

Document EP-0 635 165 describes a method and an apparatus for the production of a watersoluble protein product with a low content of iron and salts, obtained from blood, which is highly digestible and having good adhesive properties. The method comprises subjecting an aqueous blood cell material to hydrolysis at a temperature ranged between 140 and 190 °C, followed by separation of the treated material into a low-iron, liquid phase containing soluble proteins and an iron-rich, solid phase containing insoluble proteins, the liquid phase optionally being concentrated or dried to a low-iron protein product.

ES-2154182 discloses a process for recovering and purifying the globine from the blood of animals for slaughter following physico-chemical processes of extraction, precipitation and filtration

ES-8308478 discloses a method for the treatment of blood and liquids extracted from blood where the method comprises treating the blood or the product extracted from the blood with an anticoagulant comprising a compound of sulfur and oxygen.

### DESCRIPTION OF THE INVENTION

The method for collecting blood and transforming it into a hydrolyzed protein using slaughter animal blood, such as to obtain hydrolyzed blood protein, according to the invention disclosed herein, is a technological innovation compared with the current systems which are based on continuous collection systems in slaughterhouses, using a hydrolyzation reactor and a drying system.

The continuous collection system in slaughterhouses makes use of current collection technology with systems that drain the blood from the neck of the animal, with application of a specially developed additive to stabilize the product for up to seven months without the use of refrigeration, using a hydrolyzation reactor that permits the bleaching of whole blood (plasma and cell fraction), or of the cell fraction only, by means of a physicochemical procedure.

The invention incorporates a drying system which combines the use of different technologies available on the market, which permits tne drying of the product while maintaining the functional qualities of the protein.

It must also be stated that the invention can be used as a protein source, eliminating the flocculation used in slaughterhouses or the coagulation of blood in thermal tanks, to subsequently be taken to digesters or boilers for incineration, which involves a large use of energy to eliminate the blood.

More specifically, the method for collecting blood and transforming it into a hydrolyzed protein using slaughter animal blood, such as to obtain hydrolyzed blood protein, which is the object of this invention, incorporates steps of collection, separation, treatment in plasma reactor, treatment in hemoglobin reactor, treatment in a further reactor with gentle shaking, filtration, pasteurization, drying and grinding of the blood collected from the animal, wherein the blood as drained from the neck of the animal is added with a specially developed additive (metabisulfite) to stabilize the product for up to seven months without the use of refrigeration.

The blood is collected in its pure state, without water, and after metabisulfite is addded, it is poured into a receiving tank and agitated gently to separate the constituent fluids, specifically the soluble (plasma) and the non-soluble (hemoglobin) parts.

Subsequently, the plasma reactor is used to begin the treatment of the plasma with the addition of oxygen peroxide and, next, the hemoglobin is subjected to a treatment in a reactor and, following this, filtration, pasteurization, drying and grinding take place.

### PREFERRED EMBODIMENT OF THE INVENTION

The method for collecting blood and transforming it into a hydrolyzed protein using slaughter animal blood, such as to obtain hydrolyzed blood protein, consists of collecting blood, the blood having to be collected in its pure state, without water, and mixing it at the same time as its pouring with a proportion of between 5 and 25 grams per liter of metabisulfite and some grams of sugar to an amount approximate to 30% of the metabisulfite.

During the reception stage of the production process, the blood is poured into a receiving tank, which must be agitated gently, and this receiving tank is emptied from its lower part to avoid the possible existence of foam in the upper part, and in the event that pumps have to be used, the pumps must be configured as peristaltic pumps so as not to break the hemoglobin.

Regarding separation, it must be stated that the blood must be separated in order to obtain its two soluble fluids, that is to say plasma as soluble fluid and hemoglobin as non-soluble fluid.

The soluble part, that is to say the plasma that will contain almost one hundred percent of the added preservative, must be combined with an amount of soda dependent on the condition of the blood, in order to achieve neutral pH levels, that is to say pH of 7.4, in order to avoid rapid coagulation which would make it useless, and it is then treated or stored until the desired time of treatment.

The non-soluble part, that is to say the hemoglobin, is poured into a suitable reactor and combined with the same proportion of metabisulfite (between 5 and 25 grams) that was used at the beginning, in order to guarantee asepsis and create favorable conditions for the later hydrolysis and bleaching treatments.

Regarding the plasma reactor, it must be stated that the treatment of the plasma or soluble fluid begins with the slow addition of oxygen peroxide maintaining a pH level of between 6 and 7.4, preventing the flocculation of the proteins due to the acidity produced by the conversion of sulfite to sulfate caused by the sulfuric radical in the reaction and, therefore, at the same time that we add peroxide, we must add the soda gradually. Application is repeated in this way until no acidification is produced, the signal that no bisulfite remains in the mixture. This is a slow procedure which cannot be measured, but which must be continuous and must include continuous and gentle agitation.

Once the reaction has finished, the mixture is subjected to ultrafiltration to eliminate salts that have been produced, and the salts are washed at least twice. This process, which must be performed rapidly and aseptically, must include the elimination or prevention of contamination, and once filtered, the mixture must be atomized directly such as to obtain a functional product.

Next, upon the existence of hemoglobin, a hemoglobin reactor is used in the appropriate reactor and this will account for 2/3 of the whole blood, as well as with the soluble part, as albumin firstly, a product is obtained that has a functional quality due to its capacity for flocculation and retention of water, in the hydrolyzed protein that is obtained from the cell fraction that has as its primary characteristic richness in terms of digestibility, assimilation, essential amino acids, a high percentage of lysine and all elements of the L-group, and a better source of organic iron in the form of protein and, therefore, the protein obtained is ideal for human and animal nutrition.

The method that is the subject of this invention includes a treatment in a reactor, where the hemoglobin or in its absence the whole blood (both receive the same treatment) must be poured into the reactor, avoiding at all times the formation of foam that would interfere with the reaction and substantially slow down the transformation process. An amount of water equal in volume to the blood is added to avoid the formation of foam.

The reactor treatment begins with agitation and with hydrochloric acid being added until a pH level of 2 is reached, and the pH level is then immediately raised with caustic soda from 4.8 to 5.2, at which point agitation is stopped depending on the condition of the blood and samples are taken in order to check the condition of the precipitate.

Once the protein has been precipitated, oxygenated water is added to the surface of the reactor, without any agitation, at an approximate quantity that oscillates between 75 cc and 250 cc per liter of hemoglobin. We then await the production of the reaction without agitating the reactor.

Once the reaction has been produced, we begin agitation. The pH level obtained will be very low and, therefore, caustic soda is added for neutralization, and slowly we repeat the procedure until no more acidification is produced, which indicates that no bisulfite remains in the mixture, bearing in mind that the reaction must be left until no thick foam exists in the mixture. This completes the treatment in the reactor.

The next stage is filtration, in which the hydrolyzed protein is submitted to various filtration procedures until the content of salts originating from the process is minimized, and these salts will be exclusively sodium chloride and sodium sulfate and the fluid that results from the process will have a pale yellow color.

As stated above, pasteurization is carried out. That is to say, the mixture is put into suspension at the level of humidity required for spray drying, as it has to undergo pasteurization before being submitted to atomization or lyophilization in order to better guarantee asepsis. The pasteurized mixture is then dried by means of atomization or lyophilization.

Finally, the dry product is pulverized in a fine mill before being packed.

The proposed technological innovations compared with current systems can be seen in the continuous collection system in slaughterhouses, using the existing collection technology with systems that drain blood from the neck of the animal, with the addition of a specific additive to obtain stabilization of the product for up to seven months after the extraction without the use of low temperatures.

The invention also involves a hydrolyzation reactor that allows for the bleaching of the whole blood (plasma and cell fraction) or the cell fraction only by means of a physicochemical procedure.

Finally, the invention also includes a drainage system that combines the use of different technologies available on the market, which permits the drainage of the product while retaining the functional qualities of the protein.

## Claims

1. Method for collecting blood and transforming it into a hydrolyzed protein using slaughter animal blood, such as to obtain hydrolyzed blood protein, **characterized in that** it comprises the steps of collection, separation, treatment in plasma reactor, treatment in hemoglobin reactor, treatment in a further reactor with gentle shaking, filtration, pasteurization, drying and grinding of the blood collected from the animal, wherein the blood as drained from the neck of the animal is added with a specially developed additive (metabisulfite) to stabilize the product for up to seven months without the use of refrigeration.

2. Method for collecting blood and transforming it into a hydrolyzed protein using slaughter animal blood, such as to obtain hydrolyzed blood protein, according to the first claim, **characterized in that** in the collection stage the blood is collected in its pure state and without water, and mixed at the time of its pouring with a proportion of between 5 and 25 grams per liter of metabisulfite and some grams of sugar depending on the amount of metabisulfite, specifically 30% sugar in relation to the amount of metabisulfite.

3. Method for collecting blood and transforming it into a hydrolyzed protein using slaughter animal blood, such as to obtain hydrolyzed blood protein, according to the first claim, **characterized in that** in the reception stage the extracted product is poured during the production process into a receiving tank which must incorporate gentle agitation and must be capable of being emptied from its lower part thus avoiding the possibility of foam being produced in the upper part.

4. Method for collecting blood and transforming it into a hydrolysed protein using slaughter animal blood, such as to obtain hydrolyzed blood protein, according to the third claim, **characterized in that** in the case of the use of pumps, these pumps must be peristaltic pumps.

5. Method for collecting blood and transforming it into a hydrolyzed protein using slaughter animal blood, such as to obtain hydrolyzed blood protein, according to the first claim, **characterized in that** the blood must be treated to separate its constituent fluids, that is to say the soluble fluid or plasma and the non-soluble fluid or hemoglobin, with the appropriate amount of soda being added to the soluble part or plasma in order to neutralize pH or bring it to pH 7.4, thus avoiding coagulation.

6. Method for collecting blood and transforming it into a hydrolyzed protein using slaughter animal blood, such as to obtain hydrolyzed blood protein, according to the first and fifth claims, **characterized in that** the insoluble part or hemoglobin is poured into a suitable reactor, with a proportion that oscillates between 5 and 25 grams of metabisulfite being added.

7. Method for collecting blood and transforming it into a hydrolyzed protein using slaughter animal blood, such as to obtain hydrolyzed blood protein, according to the first claim, **characterized in that** the plasma reactor begins the treatment of the plasma with the slow addition of oxygen peroxide, maintaining pH between 6 and 7.4, with an appropriate amount of soda being added, the process being repeated in order to avoid acidification obviating the existence of bisulfate.

8. Method for collecting blood and transforming it into a hydrolyzed protein using slaughter animal blood, such as to obtain hydrolyzed blood protein, according to the seventh claim, **characterized in that** once the reaction has finished, the mixture is subjected to ultrafiltration, eliminating the salts produced and washing them at least twice, with atomization subsequent to filtration and the obtaining of a product.

9. Method for collecting blood and transforming it into a hydrolyzed protein using slaughter animal blood, such as to obtain hydrolyzed blood protein, according to the first claim, **characterized in that** the hemoglobin reactor to which the hemoglobin, which accounts for 2/3 of the whole blood, is added, also contains the soluble part as albumin, obtaining a product with functional quality due to its capacity for flocculation and retention of water in the hydrolyzed protein that is obtained in the cell fraction, achieving a great richness in terms of digestibility, assimilation and essential amino acids, a high percentage of lysine and all elements of the L-group.

10. Method for collecting blood and transforming it into a hydrolyzed protein using slaughter animal blood, such as to obtain hydrolyzed blood protein, according to the first claim, **characterized in that** in the treatment in a reactor the hemoglobin or in its absence all of the blood receive the same treatment, being poured into the reactor, avoiding the formation of foam, with the same volume of water as the volume of treated blood being added.

11. Method for collecting blood and transforming it into a hydrolyzed protein using slaughter animal blood, such as to obtain hydrolyzed blood protein, according to the first and tenth claims, **characterized in that** the reaction with agitation requires the addition of chloric acid until a pH level of 2 is obtained, with the pH level being raised with caustic soda to pH 4.8 to 5.2, at which point agitation is stopped, all depending on the condition of the treated blood.

12. Method for collecting blood and transforming it into a hydrolyzed protein using slaughter animal blood, such as to obtain hydrolyzed blood protein, according to the first, tenth and eleventh claims, **characterized in that** once the protein has been precipitated, and without agitation, oxygenated water is added across the entire surface of the reactor in an approximate quantity that oscillates between 75 and 250 cc per liter of hemoglobin, without agitation, waiting for the reaction to be produced in order to start further agitation, with soda being added to slowly neutralize, this process being repeated until no more acidification exists in order to avoid the existence of bisulfite in the mixture.

13. Method for collecting blood and transforming it into a hydrolyzed protein using slaughter animal blood, such as to obtain hydrolyzed blood protein, according to the first claim, **characterized in that** in the filtration stage the hydrolyzed protein is submitted to various filtration procedures until the content of salts originating from the process is minimized, establishing these salts to be exclusively sodium chloride and sodium sulfate, incorporating fluid resulting from the process that will have a pale yellow color.

14. Method for collecting blood and transforming it into a hydrolyzed protein using slaughter animal blood, such as to obtain hydrolyzed blood protein, according to the first claim, **characterized in that** in the pasteurization stage once the mixture is put into suspension at the level required for spray drying, it is subjected prior to atomization or lyophilization to pasteurization with guaranteed asepsis.

15. Method for collecting blood and transforming it into a hydrolyzed protein using slaughter animal blood, such as to obtain hydrolyzed blood protein, according to the first claim, **characterized in that** in the drying stage after pasteurization, the mixture is dried by atomization or lyophilization.

16. Method for collecting blood and transforming it into a hydrolyzed protein using slaughter animal blood, such as to obtain hydrolyzed blood protein, according to the first claim, **characterized in that** in the grinding stage, the dry product is pulverized in a fine mill before being packed.

## Patentansprüche

1. Verfahren zur Entnahme und Umwandlung von Blut in ein hydrolisiertes Protein auf der Grundlage von Schlachttierblut, mit dem hydrolisiertes Bluteiweiß erhalten wird, **dadurch gekennzeichnet, dass** das Verfahren die Schritte der Entnahme, Trennung, Reaktorbehandlung von Plasma, Reaktorbehandlung von Hämoglobin, Reaktorbehandlung mit sanftem Schütteln, Filterung, Pasteurisation, Trocknung und Mahlung des vom Tier entnommenen Blutes vorsieht, wobei dem Blut bei Entnahme mit Vakuumsystemen am Hals des Tiers ein spezifischer Zusatzstoff (Metabisulfit) dosiert hinzugefügt wird, der entwickelt wurde, um die Stabilisierung des Produkts bis zu sieben Monaten ohne Anwendung von Kälte zu erreichen.

2. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 1, **dadurch gekennzeichnet, dass** beim Entnahme-Schritt das Blut rein, ohne Wasser, entnommen und ihm gleichzeitig beim Einlaufen eine Proportion Metabisulfit zwischen 5 und 25 Gramm pro Liter sowie ein paar Gramm Zucker mit der Metabisulfit-Menge beigemischt werden, vorzugsweise 30% Zucker im Verhältnis zur Metabisulfit-Menge.

3. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 1, **dadurch gekennzeichnet, dass** beim Schritt der Aufnahme in die Anlage das entnommene Produkt auf eine Aufnahmeschale gegossen wird, die ein sanftes Schütteln vorsieht und eine Leerung im unteren Teil ermöglicht, wodurch verhindert wird, dass sich Schaum im oberen Teil bildet.

4. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 3, **dadurch gekennzeichnet, dass** im Falle des Einsatzes von Pumpen diese Pumpen peristaltisch sind.

5. Verfahren zur Entnahme und Umwandlung von Blut in ein hydrolisiertes Protein auf der Grundlage von Schlachttierblut mit dem hydrolisiertes Bluteiweiß erhalten wird, nach Anspruch 1, **dadurch gekennzeichnet, dass** das Blut dergestalt behandelt wird, dass die Flüssigkeiten, aus denen es besteht, getrennt werden, d.h. eine lösliche Flüssigkeit oder Plasma und eine nicht lösliche Flüssigkeit oder ein Hämo-Teil, wobei dem löslichen Teil oder Plasma eine geeignete Menge an Soda zugefügt wird, um den pH-Wert zu neutralisieren bzw. ihn auf einen pH-Wett von 7.4 zu bringen, wodurch seine Koagulation vermieden wird.

6. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 1 und 5, **dadurch gekennzeichnet, dass** der unlösliche oder Hämo-Teil in einen fachgerechten Reaktor eingegossen und ihm eine Proportion zwischen 5 und 25 Gramm Metabisulfit beigefügt wird.

7. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 1, **dadurch gekennzeichnet, dass** der Plasma-Reaktor die Behandlung des Plasmas mit der langsamen Hinzugabe von Sauerstoffperoxid beginnt, wobei der pH-Wert durch das Hinzufügen einer geeigneten Menge an Soda zwischen 6 und 7.4 gehalten und diese Operation wiederholt wird, um eine Versauerung und das Vorhandensein von Bisulfit zu vermeiden.

8. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 7, **dadurch gekennzeichnet, dass** nach abgeschlossener Reaktion die Masse einer Ultrafiltration unterzogen wird, mit der die entstandenen Salze entfernt und diese mindestens zweimal ausgewaschen und nach ihrer Filterung zerstäubt werden, wonach ein Produkt erhalten wird.

9. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 1, **dadurch gekennzeichnet, dass** der Hämoglobin-Reaktor, in dem das Hämoglobin, das 2/3 der Gesamtheit des vollständigen Bluts darstellt, inkorporiert wird, gleichzeitig auch den löslichen Teil wie Albumin aufnimmt, wodurch ein Produkt mit funktioneller Eigenschaft erhalten wird, dank seiner Fähigkeit der Flockung und Wasserspeicherung im hydrolisierten Protein, die im Globuli-Teil entsteht, was wiederum eine hohe Verdaulichkeit, Assimilierung, essentielle Aminosäuren, ein hoher Anteil an Lysin sowie aller Elemente der L-Gruppe ermöglicht.

10. Verfahren zur Entnahme und Umwandlung von Blut in ein hydrolisiertes Protein auf der Grundlage von Schlachttierblut mit dem hydrolisiertes Bluteiweiß erhalten wird, nach Anspruch 1, **dadurch gekennzeichnet, dass** bei der Reaktor-Behandlung das Hämoglobin, oder in dessen Ermangelung das vollständige Blut, dieselbe Behandlung erfahren und in den Reaktor eingegossen werden, wobei Schaumbildung vermieden wird, und dieselbe Menge an Wasservolumen im Blut wie das behandelte Volumen hinzugefügt wird.

11. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 1 und 10, **dadurch gekennzeichnet, dass** die Schüttel-Reaktion die Hinzugabe von Salzsäure erfordert, bis ein pH-Wert von 2 erreicht wird, wonach dieser mit Ätznatron bis auf 4.8 bis 5.2 erhöht wird, wonach das Schütteln angehalten wird, all dies in Abhängigkeit der Eigenschaft des behandelten Bluts.

12. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 1, 10 und 11, **dadurch gekennzeichnet, dass** nachdem das Eiweiß gefällt wurde ohne Schütteln auf der gesamten Oberfläche des Reaktors Wasserstoffperoxid in einer Menge von ungefähr 75 bis 250 cc pro Liter Hämoglobin wiederum ohne Schütteln hinzugefügt wird. Nachdem das Eintreten der Reaktion abgewartet wurde, wird mit dem nachfolgenden Schütteln begonnen, wobei Soda zur langsamen Neutralisierung beigefügt und diese Operation solange wiederholt wird, bis festgestellt wird, dass keine Versauerung mehr besteht, mit dem Ziel, das Vorhandensein von Bisulfit in der Masse zu vermeiden.

13. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 1, **dadurch gekennzeichnet, dass** während des Filterungs-Schritts das hydrolisierte Protein verschiedenen Filtrationen unterzogen wird, bis eine Minimierung des Gehaltes der im Verfahren entstandene Salze erreicht und festgestellt wird, dass es sich bei diesen Salzen ausschließlich um Natriumchlorid und Natriumsulfat handelt, deren sich bildende Wässer hellgelbe Farbe aufweisen.

14. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 1, **dadurch gekennzeichnet, dass** beim Pasteurisations-Schritt, nachdem die Masse in mit dem vom Trocknungszerstäuber geforderten Suspensionsgrad versetzt wurde, eine Pasteurisation mit garantierter Asepsis vor der Zerstäubung oder Gefriertrocknung vorgenommen wird.

15. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 1, **dadurch gekennzeichnet, dass** beim Trocknungs-Schritt, nachdem die Masse pasteurisiert ist, durch Zerstäubung oder Gefriertrocknung getrocknet wird.

16. Verfahren zur Entnahme und Umwandlung von Blut in ein hydrolisiertes Protein auf der Grundlage von Schlachttierblut, mit dem hydrolisiertes Bluteiweiß erhalten wird, nach Anspruch 1, **dadurch gekennzeichnet, dass** beim Schritt der Mahlung das trockene Produkt in einer Feinstaubmühle gemahlen wird, bevor zur Abfüllung übergegangen wird.

## Revendications

1. Procédé de récupération et de transformation du sang en une protéine hydrolysée à partir du sang d'animaux d'abattage, permettant d'obtenir une protéine sanguine hydrolysée, **caractérisé en ce qu'**il comprend les étapes de récupération, de séparation, de traitement dans un réacteur de plasma, de traitement dans un réacteur d'hémoglobine, de traitement dans un réacteur avec agitation douce, de filtrage, de pasteurisation, de séchage et de broyage du sang récupéré de l'animal, où le sang, à mesure qu'il est récupéré à l'aide de systèmes de pompage sur le collet de l'animal, reçoit une dose d'additif spécifique (métabisulfite) développé pour obtenir une stabilisation du produit durant les sept mois postérieurs sans application de froid.

2. Procédé de récupération et de transformation du sang en une protéine hydrolysée à partir du sang d'animaux d'abattage, permettant d'obtenir une protéine sanguine hydrolysée, selon la première revendication, **caractérisé en ce que** le sang est récupéré à l'état pur et sans eau durant l'étape de récupération tout en mélangeant pendant qu'il s'écoule la proportion de 5 à 25 grammes par litre de métabisulfite et quelques grammes de sucre d'environ la quantité de métabisulfite, soit 30 % de sucre par rapport à la quantité de métabisulfite.

3. Procédé de récupération et de transformation du sang en une protéine hydrolysée à partir du sang d'animaux d'abattage, permettant d'obtenir une protéine sanguine hydrolysée, selon la première revendication, **caractérisé en ce qu'**à l'étape de réception le produit extrait est versé durant le processus de production dans un réservoir récepteur qui devant incorporer une agitation douce et pouvant être vidé par la partie inférieure, permettrait d'éviter ainsi la possibilité de formation de mousse dans la partie supérieure.

4. Procédé de récupération et de transformation du sang en une protéine hydrolysée à partir du sang d'animaux d'abattage, permettant d'obtenir une protéine sanguine hydrolysée, selon la troisième revendication, **caractérisé en ce que**, dans le cas d'une utilisation de pompes, ces pompes doivent être péristaltiques.

5. Procédé de récupération et de transformation du sang en une protéine hydrolysée à partir du sang d'animaux d'abattage, permettant d'obtenir une protéine sanguine hydrolysée, selon la première revendication, **caractérisé en ce que** le sang doit être traité pour séparer les fluides qui le composent, à savoir un fluide soluble ou plasma et un fluide non soluble ou hémo, et par l'addition de soude dans une proportion adéquate sur la partie soluble ou plasma afin de neutraliser le pH ou la porter à un pH 7.4, et éviter ainsi sa coagulation.

6. Procédé de récupération et de transformation du sang en une protéine hydrolysée à partir du sang d'animaux d'abattage, permettant d'obtenir une protéine sanguine hydrolysée, selon la première et la cinquième revendications, **caractérisé en ce que** la partie insoluble ou hémo est versée dans un réacteur adéquat, en lui additionnant une proportion oscillant entre 5 et 25 grammes de métabisulfite.

7. Procédé de récupération et de transformation du sang en une protéine hydrolysée à partir du sang d'animaux d'abattage, permettant d'obtenir une protéine sanguine hydrolysée, selon la première revendication, **caractérisé en ce que** le réacteur de plasma entame lentement le traitement du plasma avec l'addition de peroxyde d'oxygène, en maintenant le pH entre 6 et 7.4, tout en additionnant une quantité appropriée de soude, et en répétant l'opération afin d'éviter l'acidification ainsi que l'existence de bisulfite.

8. Procédé de récupération et de transformation du sang en une protéine hydrolysée à partir du sang d'animaux d'abattage, permettant d'obtenir une protéine sanguine hydrolysée, selon la septième revendication, **caractérisé en ce que**, une fois que la réaction est finie, la môle est soumise à une ultrafiltration en éliminant les sels produits et en les lavant au moins deux fois, permettant l'atomisation postérieure au filtrage et l'obtention d'un produit.

9. Procédé de récupération et de transformation du sang en une protéine hydrolysée à partir du sang d'animaux d'abattage, permettant d'obtenir une protéine sanguine hydrolysée, selon la première revendication, **caractérisé en ce que** le réacteur d'hémoglobine où l'on verse l'hémoglobine, laquelle suppose les 2/3 du total du sang complet, incorpore simultanément la partie soluble comme albumine, pour obtenir un produit à caractère fonctionnel de par sa capacité de floculation et de rétention d'eau dans la protéine hydrolysée obtenue dans la partie globulaire, et obtenant une grande richesse en digestibilité, assimilation, acides aminés essentiels, haut pourcentage de lysine et tous les éléments du groupe L.

10. Procédé de récupération et de transformation du sang en une protéine hydrolysée à partir du sang d'animaux d'abattage, permettant d'obtenir une protéine sanguine hydrolysée, selon la première revendication, **caractérisé en ce que**, lors du traitement en réacteur l'hémoglobine, ou à défaut, le sang complet, reçoivent le même traitement et sont versés dans le réacteur en évitant la formation de mousses, et en additionnant la même quantité d'eau en volume dans le sang du volume traité.

11. Procédé de récupération et de transformation du sang en une protéine hydrolysée à partir du sang d'animaux d'abattage, permettant d'obtenir une protéine sanguine hydrolysée, selon la première et la dixième revendications, **caractérisé en ce que** la réaction avec agitation exige l'addition d'acide chlorhydrique jusqu'à atteindre un pH 2, en élevant celui-ci avec de la soude caustique jusqu'à obtenir un pH de 4.8 à 5.2, là où l'agitation est interrompue, le tout selon la qualité du sang traité.

12. Procédé de récupération et de transformation du sang en une protéine hydrolysée à partir du sang d'animaux d'abattage, permettant d'obtenir une protéine sanguine hydrolysée, selon la première, dixième et onzième revendications, **caractérisé en ce que**, après avoir précipité la protéine et sans agitation, de l'eau oxygénée est additionnée sur toute la surface du réacteur dans une quantité approximative de 75 à 250 cc par litre d'hémoglobine sans agitation jusqu'à la production de la réaction pour commencer ensuite l'agitation postérieure, en additionnant de la soude pour neutraliser lentement et en répétant cette opération jusqu'à ce que l'on constate qu'il n'existe plus d'acidification afin d'éviter l'existence de bisulfite dans la môle.

13. Procédé de récupération et de transformation du sang en une protéine hydrolysée à partir du sang d'animaux d'abattage, permettant d'obtenir une protéine sanguine hydrolysée, selon la première revendication, **caractérisé en ce que** la protéine hydrolysée est soumise à différentes filtrations durant l'étape de filtrage jusqu'à la minimisation de la charge de sels produits durant le processus, permettant de constater que ces sels seront exclusivement du chlorure de sodium et du sulfate de sodium, en incorporant des eaux résultantes qui seront de couleur jaune clair.

14. Procédé de récupération et de transformation du sang en une protéine hydrolysée à partir du sang d'animaux d'abattage, permettant d'obtenir une protéine sanguine hydrolysée, selon la première revendication, **caractérisé en ce que**, durant l'étape de pasteurisation et une fois que la môle est en suspension avec le degré exigé par l'atomiseur de séchage, on passe préalablement à son atomisation ou lyophilisation par une pasteurisation dans des conditions de garantie aseptique.

15. Procédé de récupération et de transformation du sang en une protéine hydrolysée à partir du sang d'animaux d'abattage, permettant d'obtenir une protéine sanguine hydrolysée, selon la première revendication, **caractérisé en ce que**, durant l'étape de séchage, une fois pasteurisé, le mélange est séché par atomisation ou lyophilisation.

16. Procédé de récupération et de transformation du sang en une protéine hydrolysée à partir du sang d'animaux d'abattage, permettant d'obtenir une protéine sanguine hydrolysée, selon la première revendication, **caractérisé en ce que**, durant l'étape de broyage, le produit sec est broyé dans un broyeur fin avant de procéder à son conditionnement.
